# EUROPÄISCHE PATENTSCHRIFT

(11) **EP 1 417 640 B1**
(45) Veröffentlichungstag und Bekanntmachung des Hinweises auf die Patenterteilung: **18.01.2006**
(21) Anmeldenummer: 02755459.1
(22) Anmeldetag: 31.07.2002
(51) Int. Cl.: G06K 19/07

(54) **DATENTRÄGER MIT EINER AKTIVEN SIGNALVERARBEITUNGSSCHALTUNG UND EINER PASSIVEN SIGNALVERARBEITUNGSSCHALTUNG**
DATA CARRIER HAVING AN ACTIVE SIGNAL PROCESSING CIRCUIT AND A PASSIVE SIGNAL PROCESSING CIRCUIT
SUPPORT DE DONNEES EQUIPE D'UN CIRCUIT DE TRAITEMENT DE SIGNAL ACTIF ET D'UN CIRCUIT DE TRAITEMENT DE SIGNAL PASSIF

(30) Priorität: 08.08.2001 EP 01890230
(43) Veröffentlichungstag der Anmeldung: 12.05.2004
(73) Patentinhaber: Koninklijke Philips Electronics N.V., 5621 BA Eindhoven (NL)
(72) Erfinder: SPIESS, Bernhard, G., NL-5656 AA Eindhoven (NL); JANESCH, Werner, NL-5656 AA Eindhoven (NL); ERDENIZ, Pamir, NL-5656 AA Eindhoven (NL)
(74) Vertreter: Weber, Helmut
(86) Internationale Anmeldenummer: PCT/IB2002/003205
(87) Internationale Veröffentlichungsnummer: WO 2003/015020

(56) Entgegenhaltungen:
- EP-A- 0 875 851
- WO-A-99/34325
- US-A- 5 471 212

## Beschreibung

Die Erfindung bezieht sich einen Datenträger mit einer integrierten Schaltung sowie auf eine integrierte Schaltung, wobei eine erste Signalverarbeitungsschaltung mit einer signalunabhängigen Energieversorgung und eine zweite Signalverarbeitungsschaltung mit einer signalabhängigen Energieversorgung vorgesehen sind und wobei die erste Signalverarbeitungsschaltung zum Empfangen und Verarbeiten einer Signalfolge gemäß einem ersten Übernagungsprotokoll ausgebildet ist und die zweite Signalverarbeitungsschaltung zum Empfangen und Verarbeiten einer Signalfolge gemäß einem zweiten Übertragungsprotokoll ausgebildet ist, welche Signalfolge gemäß dem zweiten Übertragungsprotokoll ein Signal-Charakteristikum enthält, und wobei eine erste Energiequelle zum Versorgen der ersten Signalverarbeitungsschaltung mit Energie vorgesehen ist und wobei eine zweite Energiequelle zum Versorgen der zweiten Signalverarbeitungsschaltung mit Energie vorgesehen ist.

Ein Datenträger mit einer integrierten Schaltung und folglich eine integrierte Schaltung entsprechend der vorstehend im ersten Absatz angeführten Ausbildung sind in mehreren Ausführungsvarianten in den Handel gebracht worden und sind daher bekannt.

Bei einem solchen Datenträger und einer solchen integrierten Schaltung ist es je nach Verwendungszweck bzw. je nach Betriebssituation erforderlich, eine automatische Auswahl der Energieversorgung für die mit Energie zu versorgenden Signalverarbeitungsschaltungen durchzuführen, da beispielsweise für den Fall, dass mit dem Datenträger bzw. der integrierten Schaltung eine Signalfolge gemäß dem zweiten Übertragungsprotokoll mit ausreichend hoher Amplitude empfangen, die Energieversorgung für die zweite Signalverarbeitungsschaltung zum Empfangen und Verarbeiten einer Signalfolge gemäß dem zweiten Übertragungsprotokoll automatisch sichergestellt werden muss, wofür es erforderlich ist, die zweite Signalverarbeitungsschaltung automatisch aus der zweiten Energiequelle mit Energie zu versorgen. Bei den bekannten Lösungen ist der Datenträger mit Mitteln zum Feststellen der Empfangsfeldstärke, die im Bereich des Datenträgers herrscht, ausgerüstet, wobei beim Feststellen des Auftretens einer hohen Empfangsfeldstärke, die in dem Datenträger eine hohe Versorgungsspannung zur Folge hat, automatisch für ein Versorgen der zweiten Signalverarbeitungsschaltung aus der zweiten Energiequelle gesorgt wird. In der Praxis hat sich gezeigt, dass diese Ausbildung in vielen Fällen zu einem einwandfreien Betriebsergebnis führt, es hat sich aber auch herausgestellt, dass es auch Betriebsfälle gibt, bei denen mit der bekannten Lösung keine zufriedenstellenden Betriebsergebnisse erzielt werden.

Ein Beispiel für eine integrierte Schaltung nach dem Stand der Technik ist die EP 0 875 851, welche einen kontaktlosen Datenträger mit einer Batterie sowie einer Versorgungsschaltung offenbart, welche einem empfangenen Trägersignal die Energie für den Datenträger entzieht. Darüber hinaus enthält der Datenträger Umschaltemittel, welche die Spannung der Batterie mit der Spannung der Versorgungsschaltung vergleicht und jeweils jene Energiequelle mit der höheren Spannung für die Versorgung des Datenträgers heranzieht.

Ein weiteres Beispiel ist die WO 99/34325, welche einen aktiven Transponder offenbart, bei dem ebenfalls zwei Energiequellen zur Versorgung des Transponders zur Wahl stehen. Hier wird anhand des Vergleichs der Spannungen der beiden Energiequellen mit einer Schwellspannung entschieden, welche der beiden Energiequellen zur Versorgung des Transponders herangezogen werden.

Die US 5,471,212 offenbart schließlich einen Transponder, bei dem Energie durch einen Stand-by-Modus gespart wird. Sobald ein Funksignal mit einer bestimmten Feldstärke empfangen wird, wechselt der Transponder in einen ersten Aktivmodus, in dem das Signal mit Hilfe eines Demodulators weiter ausgewertet wird. Erst wenn klar ist, dass das Funksignal tatsächlich den Transponder betrifft und nicht von irgendeiner anderen Quelle als einer Lesestation stammt, wechselt der Transponder in einen zweiten Aktivmodus, in welchem alle Teile des Transponders mit Energie versorgt werden.

Die Erfindung hat sich zur Aufgabe gestellt, die vorstehend erwähnten und nicht zufriedenstellenden Betriebsfälle zu vermeiden und einen verbesserten Datenträger sowie eine verbesserte integrierte Schaltung zu schaffen.

Die Vorstehend angeführle Aufgabe wird durch eine Integrierte Schaltung gemäß Anspruch 1 gelöst.

Durch das Vorsehen der Merkmale gemäß der Erfindung ist auf einfache und zusätzlich sehr betriebssichere Weise erreicht, dass stets dann ein eindeutiges Versorgen der zweiten Signalverarbeitungsschaltung aus der zweiten Energiequelle gewährleistet ist, wenn dies erforderlich ist, und zwar deshalb, weil ein solches Versorgen der zweiten Signalverarbeitungsschaltung aus der zweiten Energiequelle nur nach dem einwandfreien Erkennen des in einer Signalfolge gemäß dem zweiten Übertragungsprotokoll enthaltenen Signal-Charakteristikums durchgeführt wird, wobei dieses Erkennen bei normalen Betriebsverhältnissen gänzlich unabhängig von der Empfangsfeldstärke im Bereich eines Datenträgers gemäß der Erfindung ist.

Bei einem Datenträger gemäß der Erfindung und bei einer integrierten Schaltung gemäß der Erfindung hat es sich als sehr vorteilhaft erwiesen, wenn zusätzlich die Merkmale gemäß den Ansprüchen 2 und 3 vorgesehen sind. Diese Ausbildungen haben sich im Hinblick auf ein besonders eindeutiges und sicheres Erkennen eines Signal-Charakteristikums als vorteilhaft erwiesen, wobei zusätzlich auch noch als vorteilhaft zu erwähnen ist, dass hierdurch das Erkennen des Signal-Charakteristikums auch auf besonders einfache Weise durchführbar ist. Es sei aber erwähnt, dass das Signal-Charakteristikum auch durch eine bestimmte Bit-Kombination in einer Signalfolge gemäß dem zweiten Übertragungsprotokoll gebildet sein kann, welche bestimmte Bit-Kombination in einer Signalfolge gemäß dem ersten Übertragungsprotokoll mit Sicherheit nie auftritt.

Bei einem Datenträger gemäß der Erfindung und bei einer integrierten Schaltung gemäß der Erfindung hat es sich weiters als besonders vorteilhaft erwiesen, wenn zusätzlich die Merkmale gemäß dem Anspruch 4 vorgesehen sind. Durch diese Maßnahmen ist vorteilhafterweise erreicht, dass mit Hilfe der zwei steuerbaren Schaltmittel die Datenverarbeitungsmittel, die einen Hauptenergieverbraucher bilden, zur Gänze von den zwei Energiequellen getrennt werden können und folglich jeglicher unnötige und unerwünschte Energieverbrauch unterbunden ist.

Die vorstehend angeführten Aspekte und weitere Aspekte der Erfindung gehen aus dem nachfolgend beschriebenen Ausführungsbeispiel hervor und sind anhand dieses Ausführungsbeispiels erläutert.

Die Erfindung wird im Folgenden anhand von einem in den Zeichnungen dargestellten Ausführungsbeispiel weiter beschrieben, auf das die Erfindung aber nicht beschränkt ist.
Die Figur 1 zeigt schematisch in Form eines Blockschaltbildes einen Datenträger gemäß einem Ausführungsbeispiel der Erfindung.
Die Figur 2 zeigt ein Zeitdiagramm von einem Teil einer Signalfolge gemäß einem ersten Übertragungsprotokoll, welcher Teil am Beginn der Signalfolge auftritt.
Die Figur 3 zeigt ein Zeitdiagramm von einem Teil einer Signalfolge gemäß einem zweiten Übertragungsprotokoll, welcher Teil am Beginn der Signalfolge auftritt.

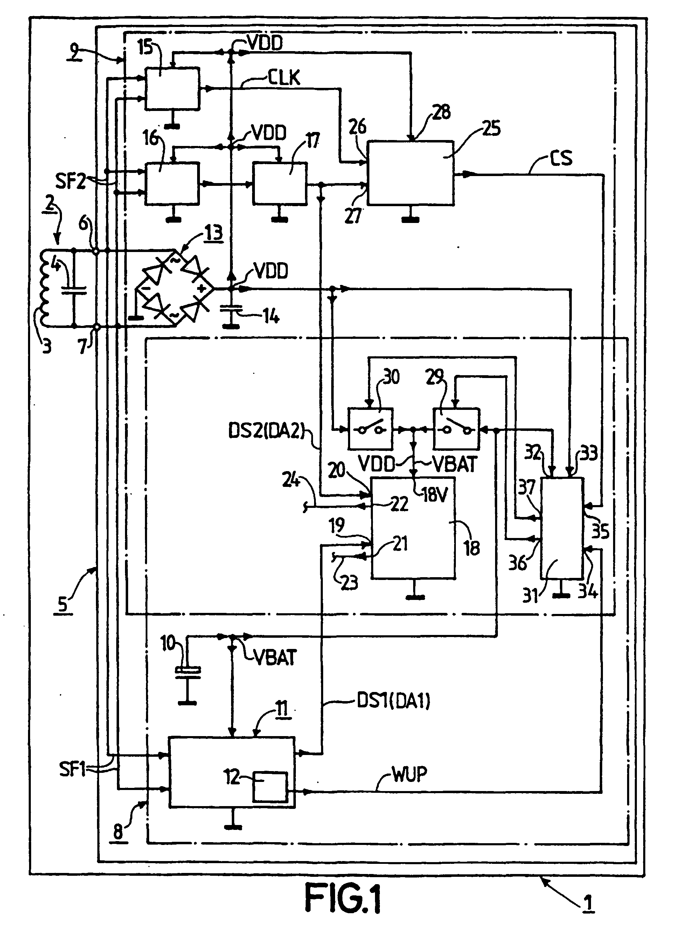

In der Figur 1 ist ein Datenträger 1 dargestellt. Der Datenträger 1 ist so ausgebildet, dass mit dem Datenträger 1 eine erste Betriebsfunktion, die üblicherweise als sogenannte aktive Betriebsfunktion bezeichnet wird, und eine zweite Betriebsfunkrtion, die üblicherweise als eine sogenannte passive Betriebsfunktion bezeichnet wird, realisierbar sind. Die beiden Betriebsfunktionen unterscheiden sich unter anderem dadurch, dass bei der sogenannten aktiven Betriebsfunktion eine signalunabhängige Energieversorgung aus einer in dem Datenträger 1 enthaltenen Batterie und bei der sogenannten passiven Betriebsfunktion eine Energieversorgung aus einem hierfür vorgesehenen Stützkondensator durchgeführt wird, wobei der Stützkondensator mit Hilfe von Gleichrichtermitteln aufgeladen werden kann, welche Gleichrichtermittel zum Gleichrichten eines empfangenen Signals vorgesehen sind. Darauf ist nachfolgend noch näher eingegangen.

Bei einem solchen Datenträger 1 ist es von großer Wichtigkeit, dass die in dem Datenträger 1 enthaltene Batterie möglichst wenig belastet wird, also ein möglichst geringer Energieverbrauch realisiert wird, um eine möglichst lange Lebensdauer für die Batterie zu erreichen.

Der Datenträger 1 enthält Übertragungsmittel 2, die aus einer Übertragungsspule 3 und aus einem zu der Übertragungsspule 3 parallel geschalteten Kondensator 4 bestehen. Die Übertragungsspule 3 und der Kondensator 4 bilden einen Parallel-Schwingkreis, dessen Resonanzfrequenz f₀ zumindest im wesentlichen der Frequenz eines Trägersignals entspricht, mit Hilfe von welchem Trägersignal eine Signalübertragung bzw. Datenübertragung von einer in der Figur 1 nicht dargestellten Kommunikationsstation zu dem Datenträger 1 gemäß der Figur 1 durchführbar ist.

Der Datenträger 1 enthält weiters eine integrierte Schaltung 5. Die integrierte Schaltung 5 weist zwei Anschlüsse 6 und 7 auf, mit denen die Übertragungsspule 3 und der Kondensator 4 verbunden sind. An dieser Stelle sei erwähnt, dass der Kondensator 4 nicht unbedingt durch einen gegenüber der integrierten Schaltung 5 externen Kondensator gebildet sein muss, sondern auch durch einen in der integrierten Schaltung 5 realisierten internen Kondensator gebildet sein kann.

In der integrierten Schaltung 5 ist eine erste Signalverarbeitungsschaltung 8 mit einer signalunabhängigen Energieversorgung vorgesehen. In der integrierten Schaltung 5 ist weiters eine zweite Signalverarbeitungsschaltung 9 mit einer signalabhängigen Energieversorgung vorgesehen.

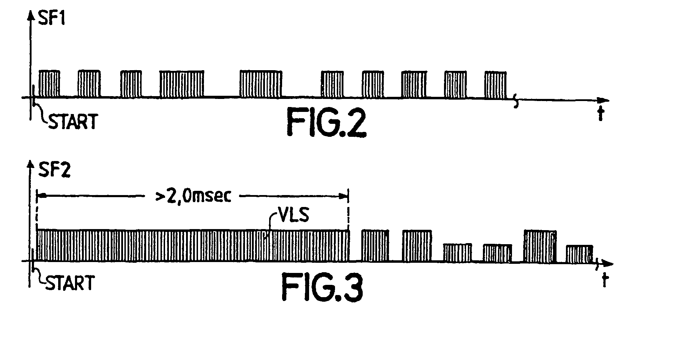

Die erste Signalverarbeitungsschaltung 8 ist zum Realisieren der ersten Betriebsfunktion vorgesehen und ist zum Empfangen und Verarbeiten einer Signalfolge SF1 gemäß einem ersten Übertragungsprotokoll ausgebildet. Mit Bezug auf die erste Signalfolge SF1 ist auf die Figur 2 zu verweisen, in der ein Teil der Signalfolge SF1 schematisch dargestellt ist. Bei der Signalfolge SF1 handelt es sich um ein Manchester-kodiertes Signal, bei dem das erwähnte Trägersignal entsprechend einem Manchester-Kode kodiert ist. In einem solchen Manchester-kodierten Signal ist es nicht möglich, dass ein länger als eine vorgegebene Zeitspanne, nämlich länger als 256 Mikrosekunden (256 µsec), andauernder Signalzustand ohne einem Wechsel in dem Signal, also ohne einem Wechsel in dem modulierten Trägersignal auftritt, weil dieses Trägersignal beispielsweise einer 100%-Amplitudenmodulation (ASK) unterworfen ist und auf Grund der Manchester-Kodierung ein Signalwechsel nach längstens 256 Mikrosekunden auftreten muss.

Die zweite Signalverarbeitungseinrichtung 9 ist zum Realisieren der erwähnten passiven Betriebsfunktion vorgesehen und ist zum Empfangen und Verarbeiten einer Signalfolge SF2 gemäß einem zweiten Übertragungsprotokoll ausgebildet. Mit Bezug auf die Signalfolge SF2 ist auf die Figur 3 zu verweisen, in der ein Teil der Signalfolge SF2 schematisch dargestellt ist. Das Wesentliche bei der Signalfolge SF2 im vorliegenden Zusammenhang liegt darin, dass bei der Signalfolge SF2 am Beginn dieser Signalfolge SF2 ein Signal-Charakteristikum vorgesehen ist, wobei es sich bei diesem Signal-Charakteristikum um ein sogenanntes Vorlaufsignal VLS mit einer bestimmten Mindestzeitdauer handelt, wobei das das Signal-Charakteristikum bildende Vorlaufsignal VLS durch das unmodulierte Trägersignal gebildet ist. In dem hier vorliegenden Fall erstreckt sich das Vorlaufsignal VLS über eine Mindestzeitdauer, die größer als zwei Millisekunden (2,0 msec) ist, wie dies in der Figur 3 angegeben ist. Das Vorlaufsignal VLS ist in dem hier vorliegenden Fall deshalb erforderlich, weil bei der passiven Betriebsfunktion es erforderlich ist, vor einem eigentlichen Kommunikationsvorgang eine für die Durchführung eines Kommunikationsvorgangs erforderliche und den hierfür benötigten Schaltungsteilen zuzuführende Versorgungsspannung VDD aufzubauen. Um das Aufbauen der Versorgungsspannung VDD auf einfache Weise zu gewährleisten, wird hierfür das Vorlaufsignal VLS ausgenützt.

Die erste Signalverarbeitungsschaltung 8 mit signalunabhängiger Energieversorgung enthält eine erste Energiequelle 10 zum Versorgen der ersten Signalverarbeitungsschaltung 8 mit Energie, wobei die erste Energiequelle 8 durch eine Batterie 10 gebildet ist.

Die erste Signalverarbeitungsschaltung 8 enthält weiters Empfangssignal-Verarbeitungsmittel 11, die mit den Anschlüssen 6 und 7 der integrierten Schaltung 5 verbunden sind. Die Empfangssignalverarbeitungsmittel 11 enthalten auf bekannte Weise Mittel zum Demodulieren eines mit Hilfe der Übertragungsmittel 2 empfangenen Signals und Mittel zum Dekodieren eines demodulierten Signals und Mittel zum Abgeben eines ersten Datensignal DS1, in dem mit dem Datenträger 1 bei der aktiven Betriebsfunktion empfangene erste Daten DA1 enthalten sind. Weiters enthalten die Empfangssignal-Verarbeitungsmittel 11 eine Wakeupsignal-Erzeugungsstufe 12, mit deren Hilfe nach dem Feststellen eines Empfangens einer Signalfolge SF1 gemäß dem ersten Übertragungsprotokoll ein Wakeupsignal WUP erzeugbar ist.

Die zweite Signalverarbeitungsschaltung 9 enthält Gleichrichtermittel 13, die in dem vorliegenden Fall nach Art eines Brückengleichrichters ausgebildet sind. Die Gleichrichtermittel 13 sind mit den Anschlüssen 6 und 7 der integrierten Schaltung 5 verbunden. Die Gleichrichtermittel 13 sind zum Erzeugen der bereits erwähnten Versorgungsspannung VDD vorgesehen. Den Gleichrichtermitteln 13 ist ein Stützkondensator 14 nachgeschaltet, der eine zweite Energiequelle zum Versorgen der zweiten Signalverarbeitungsschaltung 9 mit Energie vorgesehen ist.

Die zweite Signalverarbeitungsschaltung 9 enthält weiters eine Taktsignal-Regenerierungsstufe 15, die ebenso mit den Anschlüssen 6 und 7 der integrierten Schaltung 5 verbunden ist und die zum Erzeugen und Abgeben eines regenerierten Taktsignals CLK vorgesehen und ausgebildet ist. Das regenerierte Taktsignal CLK wird einem Teil der Schaltungsbestandteile der zweiten Signalverarbeitungsschaltung 9 zugeführt, worauf hier aber nicht näher eingegangen ist, weil dies eine für einen Durchschnittsfachmann seit langem bekannte Maßnahme darstellt.

Die zweite Signalverarbeitungsschaltung 9 enthält weiters eine Demodulationsstufe 16, die ebenso mit den Anschlüssen 6 und 7 der integrierten Schaltung 5 verbunden ist und die zum Demodulieren eines mit den Übertragungsmitteln 2 empfangenen Signals vorgesehen und ausgebildet ist. Der Demodulationsstufe 16 ist eine Dekodierstufe 17 nachgeschaltet, die zum Dekodieren eines demodulierten Signals vorgesehen und ausgebildet ist. Die Dekodierstufe 17 liefert ein zweites Datensignal DS2, in dem mit dem Datenträger 1 bei der passiven Betriebsfunktion empfangene zweite Daten DA2 enthalten sind. -

In der integrierten Schaltung 5 sind weiters Datenverarbeitungsmittel 18 vorgesehen, die in dem hier vorliegenden Fall durch einen Mikrocomputer 18 gebildet sind. Die Datenverarbeitungsmittel 18 können aber auch durch eine fest-verdrahtete Logikschaltung gebildet sein. Die Datenverarbeitungsmittel 18 weisen einen ersten Eingang 19 und einen zweiten Eingang 20 auf. Dem ersten Eingang 19 ist das die ersten Daten DA1 enthaltende erste Datensignal DS1 zuführbar. Dem zweiten Eingang 20 ist das die zweiten Daten DA2 enthaltende zweite Datensignal DS2 zuführbar. Mit Hilfe der Datenverarbeitungsmittel 18 wird eine Verarbeitung der ihr zugeführten ersten Daten DA1 bzw. zweiten Daten DA2 durchgeführt, dies in Abhängigkeit davon, ob der Datenträger 1 zur Realisierung der aktiven Betriebsfunktion oder zur Realisierung der passiven Betriebsfunktion aktiviert ist. Die Datenverarbeitungsmittel 18 gehören sowohl der ersten Signalverarbeitungsschaltung 8 als auch der zweiten Signalverarbeitungsschaltung 9 an.

Die Datenverarbeitungsmittel 18 weisen weiters einen ersten Ausgang 21 und einen zweiten Ausgang 22 auf, an welchen Ausgängen je nach aktivierter Betriebsfunktion mit Hilfe der Datenverarbeitungsmittel 18 verarbeitete Daten auftreten, welche Daten über Verbindungen 23 und 24 nicht dargestellten Schaltungsteilen zuführbar sind, welche Schaltungsteile zum Verarbeiten der ihnen zugeführten Daten bzw. der ihnen zugeführten Datensignale ausgebildet sind und mit welchen Schaltungsteilen letztendlich zu sendende Signale erzeugbar sind, welche zu sendenden Signale mit Hilfe der Übertragungsmittel 2 zu einer nicht dargestellten Kommunikationsstation übertragbar sind.

Bei der integrierten Schaltung 5 und folglich bei dem die integrierte Schaltung 5 enthaltenden Datenträger 1 sind vorteilhafterweise Detektiermittel 25 vorgesehen. Die Detektiermittel 25 sind zum Detektieren des Signal-Charakteristikums VLS in der Signalfolge SF2 gemäß dem zweiten Übertragungsprotokoll ausgebildet, sie sind also zum Detektieren des Vorlaufsignals VLS ausgebildet, was mit anderen Worten heißt, dass in dem hier vorliegenden Fall die Detektiermittel 25 zum Detektieren des das Vorlaufsignal VLS bildenden unmodulierten Trägersignals ausgebildet sind. Weiters ist bei dem Datenträger 1 die schaltungsmäßige Ausbildung der Detektiermittel 25 so gewählt, dass die Detektiermittel 25 zum Auslösen des Versorgens von einem Teil der zweiten Signalverarbeitungsschaltung 9, nämlich in dem hier vorliegenden Fall der Datenverarbeitungsmittel 18, mit Energie aus der zweiten Energiequelle 14 nach einem Erkennen des Auftretens des Signal-Charakteristikums VLS, also des Vorlaufsignals VLS, ausgebildet sind.

Den Detektiermitteln 25 werden an einem ersten Eingang 26 das regenerierte Taktsignal CLK und an einem zweiten Eingang 27 das von der Dekodierstufe 17 abgegebene zweite Datensignal DS2 zugeführt. Weiters wird den Detektiermitteln 25 an einem dritten Eingang 28 die Versorgungsspannung VDD zugeführt. Das regenerierte Taktsignal CLK dient in den Detektiermitteln 25 als Zeitreferenz, um die Dauer des in dem zweiten Datensignal DS2 auftretenden Vorlaufsignals VLS auf einfache Weise ermitteln zu können. Durch das Zuführen der Versorgungsspannung VDD zu den Detektiermitteln 25 ist erreicht, dass hierdurch nicht nur eine Energieversorgung der Detektiermittel 25 erreicht ist, sondern dass zusätzlich auch noch erreicht ist, dass die Detektiermittel 25 nur dann eine Detektierfunktion erfüllen können, wenn eine ausreichend hohe Versorgungsspannung VDD vorliegt, was mit anderen Worten heißt, dass nur bei einem Vorlaufsignal VLS mit einer ausreichend hohen Amplitude ein Ermitteln einer Mindestdauer des Vorlaufsignals VLS durchgeführt wird. Diese Mindestdauer ist kürzer als die tatsächliche Dauer des Vorlaufsignals VLS, was deshalb erforderlich ist, weil unmittelbar nach dem Anfang (START) des Vorlaufsignals VLS an dem Stützkondensator 14 erst ein Aufbauen der Versorgungsspannung VDD erfolgt, welches Aufbauen der Versorgungsspannung VDD eine bestimmte Zeitspanne erfordert, die verstrichen lassen werden muss, bevor ein Detektieren mit Hilfe der Detektiermittel 25 durchgeführt werden kann. Mit Hilfe der Detektiermittel 25 erfolgt somit eine Detektion, ob ein als Vorlaufsignal VLS empfangenes unmoduliertes Trägersignal mit ausreichend hoher Amplitude vorliegt und für eine Mindestzeitspanne von in dem hier vorliegenden Fall mehr als zwei Millisekunden (2,0 msec) auftritt. Wenn mit Hilfe der Detektiermittel 25 ein solcher Sachverhalt festgestellt wird, dann muss es sich tatsächlich um den Vorlaufabschnitt VLS einer Signalfolge SF2 gemäß dem zweiten Übertragungsprotokoll handeln, so dass in weiterer Folge die zweite Signalverarbeitungsschaltung 9 in ihrer Gesamtheit aktiviert werden muss, also mit der Versorgungsspannung VDD versorgt werden muss; um die Signalfolge SF2 gemäß dem zweiten Übertragungsprotokoll verarbeiten zu können.

Um die vorstehend erläuterte Betriebssituation zu ermöglichen, ist bei dem Datenträger 1 folgende schaltungsmäßige Lösung vorgesehen:

Zwischen der ersten Energiequelle 10, also der Batterie 10, und den Datenverarbeitungsmitteln 18, und zwar einem Versorgungseingang 18V der Datenverabeitungsmittel 18 sind erste steuerbare Schaltmittel 29 vorgesehen. Zwischen der zweiten Energiequelle 14, also dem Stützkondensator 14, und den Datenverarbeitungsmitteln 18, und zwar dem Versorgungseingang 18V der Datenverarbeitungsmittel 18 sind zweite steuerbare Schaltmittel 30 vorgesehen. Weiters ist zum Steuern der ersten Schaltmittel 29 und der zweiten Schaltmittel 30 eine Steuerstufe 31 vorgesehen.

Die Steuerstufe 31 weist einen ersten Eingang 32 und einen zweiten Eingang 33 und einen dritten Eingang 34 und einen vierten Eingang 35 sowie einen ersten Ausgang 36 und einen zweiten Ausgang 37 auf. An dem ersten Eingang 32 liegt permanent die von der ersten Energiequelle 10 abgegebene Versorgungsspannung VBAT an. An dem zweiten Eingang 33 liegt die mit Hilfe der Gleichrichtermittel 13 erzeugte Versorgungsspannung VDD an, wobei das Zuführen der Versorgungsspannung VDD zu der Steuerstufe 31 nicht nur zur Spannungsversorgung der Steuerstufe 31 dient, sondern zusätzlich auch als Information darüber, dass eine Versorgungsspannung VDD überhaupt vorhanden ist, dass also mit Hilfe der Übertragungsmittel 2 ein Signal mit ausreichend hoher Amplitude empfangen wird und somit auch ein Vorlaufsignal VLS mit ausreichend hoher Amplitude vorliegen muss.

Dem dritten Eingang 34 der Steuerstufe 31 ist das Wakeupsignal WUP zuführbar, so dass mit Hilfe des Wakeupsignals WUP der Steuerstufe 31 mitteilbar ist, dass mit Hilfe der Empfangssignal-Verarbeitungsmittel 11 eine Signalfolge SF1 gemäß dem ersten Übertragungsprotokoll empfangen wurde. Wenn der Steuerstufe 31 ein Wakeupsignal WUP zugeführt wurde, dann hat dies zur Folge, dass die Steuerstufe 31 über ihre zwei Ausgänge 36 und 37 solche Steuersignale bzw. Steuerinformationen an das erste Schaltmittel 29 und an das zweite Schaltmittel 30 abgibt, dass das erste Schaltmittel 29 in einen leitenden Schaltzustand gesteuert wird und das zweite Schaltmittel 30 in einen nicht-leitenden Schaltzustand gesteuert wird, was zur Folge hat, dass die Datenverarbeitungsmittel 18 in diesem Fall aus der ersten Energiequelle 10 mit der Versorgungsspannung VBAT und folglich mit Energie versorgt werden.

Über den vierten Eingang 35 der Steuerstufe 31 ist die Steuerstufe 31 mit den Detektiermitteln 25 verbunden. Wenn die Detektiermittel 25 das Auftreten des Signal-Charakteristikums VLS, also ein Auftreten des Vorlaufsignals VLS, in einer Signalfolge SF2 gemäß dem zweiten Übertragungsprotokoll feststellen, dann geben die Detektiermittel 25 ein Steuersignal CS ab, welche Steuersignal CS dem vierten Eingang 35 der Steuerstufe 31 zugeführt wird. Mit Hilfe des Steuersignals CS ist die Steuerstufe 31 von den Detektiermitteln 25 in der Weise steuerbar, dass nach einem Erkennen des Auftretens des Vorlaufsignals VLS die zweiten Schaltmittel 30 in einen die Datenverarbeitungsmittel 18 mit der zweiten Energiequelle 14 verbindenden leitenden Schaltzustand gesteuert sind, wobei dann die ersten Schaltmittel 29 in einen nicht-leitenden Schaltzustand gesteuert sind. Hierdurch ist erreicht, dass bei dieser Betriebssituation die Datenverarbeitungsmittel 18 über ihren Versorgungseingang 18V und über die zweiten Schaltmittel 28 aus der zweiten Energiequelle, also aus dem Stützkondensator 14, mit der Versorgungsspannung VDD und folglich mit Energie versorgt sind.

Bei einem Ruhezustand des Datenträgers 1, bei dem weder die aktive Betriebsfunktion noch die passive Betriebsfunktion aktiviert sind, sorgt die Steuerstufe 31 dafür, dass sowohl die ersten Schaltmittel 29 als auch die zweiten Schaltmittel 30 in ihren nicht-leitenden Schaltzustand gesteuert sind, wodurch dann erreicht ist, dass die Datenverarbeitungsmittel 18 zur Gänze von den zwei Energiequellen 10 und 14 geschaltet sind, so dass jeder unnötige Energieverbrauch mit Sicherheit vermieden ist.

Bei dem vorstehend beschriebenen Datenträger 1 gemäß der Figur 1 wird mit Hilfe der ersten steuerbaren Schaltmittel 29 und der zweiten steuerbaren Schaltmittel 30 nur die Spannungsversorgung der Datenverarbeitungsmittel 18, also des Mikrocomputers 18, umgeschaltet, und zwar entsprechend der jeweils gewünschten Betriebsfunktion, ob also die aktive Betriebsfunktion oder die passive Betriebsfunktion durchgeführt werden soll. Es ist darauf hinzuweisen, dass es auch möglich ist, nicht nur die Energieversorgung für einen Mikrocomputer eines Datenträgers umzuschalten, sondern dass zusätzlich zu einem Mikrocomputer oder einer an Stelle eines solches Mikrocomputers vorgesehenen festverdrahteten Logikschaltung auch noch weitere Schaltungsteile über hierfür vorgesehene steuerbare Schaltmittel entweder an eine von einer Batterie abgegebene Versorgungsspannung VBAT oder an eine von einem Stützkondensator abgegebene Versorgungsspannung VDD angeschaltet werden können.

Auch kann eine Ausbildung einer integrierten Schaltung realisiert werden, bei der die erste Signalverarbeitungsschaltung mit signalunabhängiger Energieversorgung zum Verarbeiten einer Signalfolge gemäß einem ersten Übertragungsprotokoll und die zweite Signalverarbeitungsschaltung mit signalabhängiger Energieversorgung zum Verarbeiten einer Signalfolge gemäß einem zweiten Übertragungsprotokoll zur Gänze schaltungsmäßig voneinander getrennt sind und wobei gegebenenfalls das Anschalten der jeweils benötigten Versorgungsspannung VBAT oder VDD an die betreffende Signalverarbeitungsschaltung jeweils praktisch für die gesamte Signalverarbeitungsschaltung durchgeführt wird.

## Patentansprüche

1. Integrierte Schaltung (5), umfassend
- eine erste Signalverarbeitungsschaltung (8) mit einer ersten Energiequelle (10) zur signalunabhängigen Energieversorgung der ersten Signalverarbeitungsschaltung (8), wobei die erste Signalverarbeitungsschaltung (8) zum Empfangen und Verarbeiten einer Signalfolge (SF1) gemäß einem ersten Übertragungsprotokoll ausgebildet ist, und
- eine zweite Signalverarbeitungsschaltung (9) mit einer zweiten Energiequelle (14) zur signalabhängigen Energieversorgung der zweiten Signalverarbeitungsschaltung (9),
**dadurch gekennzeichnet,**
- **dass** die zweite Signalverarbeitungsschaltung (9) zum Empfangen und Verarbeiten einer Signalfolge (SF2) gemäß einem zweiten Übertragungsprotokoll ausgebildet ist, welche Signalfolge (SF2) gemäß dem zweiten Übertragungsprotokoll ein Signal-Charakteristikum (VLS) enthält, und
- **dass** Detektiermittel (25) vorgesehen sind, die zum Detektieren des Signal-Charakteristikums (VLS) in der Signalfolge (SF2) gemäß dem zweiten Übertragungsprotokoll ausgebildet sind und die zum Auslösen des Versorgens von mindestens einem Teil (18) der zweiten Signalverarbeitungsschaltung (9) mit Energie aus der zweiten Energiequelle (14) nach einem Erkennen des Auftretens des Signal-Charakteristikums (VLS) ausgebildet sind.

2. Integrierte Schaltung (5) nach Anspruch 1,
- wobei die zweite Signalverarbeitungsschaltung (9) zum Empfangen und Verarbeiten einer Signalfolge (SF2) gemäß dem zweiten Übertragungsprotokoll ausgebildet ist, wobei das Signal-Charakteristikum (VLS) dieser Signalfolge (SF2) durch ein Vorlaufsignal (VLS) mit einer bestimmten Mindestzeitdauer gebildet ist, und
- wobei die Detektiermittel (25) zum Detektieren des Vorlaufsignals (VLS) ausgebildet sind.

3. Integrierte Schaltung (5) nach Anspruch 2,
- wobei die zweite Signalverarbeitungsschaltung (9) zum Empfangen und Verarbeiten einer Signalfolge (SF2) gemäß dem zweiten Übertragungsprotokoll ausgebildet ist, wobei das das Signal-Charakteristikum (VLS) bildende Vorlaufsignal (VLS) durch ein unmoduliertes Trägersignal gebildet ist, und
- wobei die Detektiermittel (25) zum Detektieren des das Vorlaufsignal (VLS) bildenden unmodulierten Trägersignals ausgebildet sind.

4. Integrierte Schaltung (5) nach Anspruch 1,
- wobei Datenverarbeitungsmittel (18) vorgesehen sind, die sowohl der ersten Signalverarbeitungsschaltung (8) als auch der zweiten Signalverarbeitungsschaltung (9) angehören, und
- wobei zwischen der ersten Energiequelle (10) und den Datenverarbeitungsmitteln (18) erste steuerbare Schaltmittel (29) vorgesehen sind und
- wobei zwischen der zweiten Energiequelle (14) und den Datenverarbeitungsmitteln (18) zweite steuerbare Schaltmittel (30) vorgesehen sind und
- wobei eine Steuerstufe (31) zum Steuern der ersten Schaltmittel (29) und der zweiten Schaltmittel (30) vorgesehen ist und
- wobei die Steuerstufe (31) mit den Detektiermitteln (25) verbunden ist und von den Detektiermitteln (25) in der Weise steuerbar ist, dass nach einem Erkennen des Auftretens des Signal-Charakteristikums (VLS) die zweiten steuerbaren Schaltmittel (30) in einen die Datenverarbeitungsmittel (18) mit der zweiten Energiequelle (14) verbindenden Schaltzustand gesteuert sind.

5. Datenträger (1) mit einer integrierten Schaltung (5) nach einem der Ansprüche 1 bis 4.

## Claims

1. An integrated circuit (5), comprising
- a first signal processing circuit (8) with a first power source (10) for supplying the first signal processing circuit (8) with power, wherein the first signal processing circuit (8) is designed to receive and process a signal stream (SF1) in accordance with a first transmission protocol, and
- a second signal processing circuit (9) with a second power source (14) for supplying the second signal processing circuit (9) with power,
**characterized in that**
- the second signal processing circuit (9) is designed to receive and process a signal stream (SF2) in accordance with a second transmission protocol, which signal stream (SF2) in accordance with the second transmission protocol comprises a signal characteristic (VLS), and **in that**
- detection means (25) are provided, designed for detecting the signal characteristic (VLS) in the signal stream (SF2) in accordance with the second transmission protocol, and also designed for initiating the supplying of at least one part (18) of the second signal processing circuit (9) with power from the second power source (14) following a recognition of the occurrence of the signal characteristic (VLS).

2. An integrated circuit (5) as claimed in claim 1,
- wherein the second signal processing circuit (9) is designed to receive and process a signal stream (SF2) in accordance with the second transmission protocol, wherein the signal characteristic (VLS) of this signal stream (SF2) is formed by a lead signal (VLS) with a specific minimum duration, and
- wherein the detection means (25) are designed for detecting the lead signal (VLS).

3. An integrated circuit (5) as claimed in claim 2,
- wherein the second signal processing circuit (9) is designed to receive and process a signal stream (SF2) in accordance with the second transmission protocol, wherein the lead signal (VLS) forming the signal characteristic (VLS) is formed by an unmodulated carrier signal, and
- wherein detection means (25) are designed for detecting the unmodulated carrier signal forming the lead signal (VLS).

4. An integrated circuit (5) as claimed in claim 1,
- wherein data processing means (18) are provided, which data processing means (18) are related to both the first signal processing circuit (8) and the second signal processing circuit (9), and
- wherein, between the first power source (10) and the data processing means (18), are provided first controllable switching means (29), and
- wherein, between the second power source (14) and the data processing means (18), are provided second controllable switching means (30), and
- wherein a control stage (31) is provided to control the first switching means (29) and the second switching means (30), and
- wherein the control stage (31) is connected to the detection means (25) and can be controlled by detection means (25) in such a manner that, following recognition of the occurrence of the signal characteristic (VLS), the second controllable switching means (30) are controlled into a switching state that connects the data processing means (18) to the second power source (14).

5. A data carrier (1) comprising an integrated circuit (5) as claimed in any one of the claims 1 to 4.

## Revendications

1. Circuit intégré (5) comprenant :
- un premier circuit de traitement de signal (8) avec une première source d'énergie (10) pour l'alimentation en énergie indépendante du signal du premier circuit de traitement de signal (8), le premier circuit de traitement de signal (8) étant conçu pour la réception et le traitement d'une séquence de signaux (SF1) selon un premier protocole de transmission et
- un deuxième circuit de traitement de signal (9) avec une deuxième source d'énergie (14) pour l'alimentation en énergie dépendante du signal du deuxième circuit de traitement de signal (9),
**caractérisé en ce**
- **que** le deuxième circuit de traitement de signal (9) est conçu pour la réception et le traitement d'une séquence de signaux (SF2) selon un deuxième protocole de transmission, laquelle séquence de signaux (SF2) contient une caractéristique de signal (VLS) conformément au deuxième protocole de transmission et
- **qu'**il est prévu des moyens de détection (25) qui sont conçus pour la détection de la caractéristique du signal (VLS) dans la séquence de signaux (SF2) selon le deuxième protocole de transmission et qui sont conçus pour le déclenchement de l'alimentation d'au moins une partie (18) du deuxième circuit de traitement des signaux (9) en énergie à partir de la deuxième source d'énergie (14) selon une reconnaissance de l'apparition de la caractéristique du signal (VLS).

2. Circuit intégré (5) selon la revendication 1,
- dans lequel le deuxième circuit de traitement de signal (9) est conçu pour la réception et le traitement d'une séquence de signaux (SF2) selon le deuxième protocole de transmission, la caractéristique de signal (VLS) de cette séquence de signaux (SF2) étant formée par un signal d'avance (VLS) avec une durée minimale déterminée et
- dans lequel les moyens de détection (25) sont conçus pour la détection du signal d'avance (VLS).

3. Circuit intégré (5) selon la revendication 2,
- dans lequel le deuxième circuit de traitement de signal (9) est conçu pour la réception et le traitement d'une séquence de signaux (SF2) selon le deuxième protocole de transmission, le signal d'avance (VLS) formant la caractéristique de signal (VLS) étant formé par un signal porteur non modulé, et
- dans lequel les moyens de détection (25) sont conçus pour la détection du signal porteur non modulé formant le signal d'avance (VLS).

4. Circuit intégré (5) selon la revendication 1,
- dans lequel il est prévu des moyens de traitement de données (18) qui appartiennent à la fois au premier circuit de traitement de signal (8) et au deuxième circuit de traitement de signal (9) et
- dans lequel il est prévu des premiers moyens de commutation (29) commandables entre la première source d'énergie (10) et les moyens de traitement de données (18) et
- dans lequel il est prévu des deuxièmes moyens de commutation (30) commandables entre la deuxième source d'énergie (14) et les moyens de traitement de données (18) et
- dans lequel un étage de commande (31) est prévu pour la commande des premiers moyens de commutation (29) et des deuxièmes moyens de commutation (30) et
- dans lequel l'étage de commande (31) est relié aux moyens de détection (25) et les moyens de détection (25) peuvent commander de telle manière que les deuxièmes moyens de commutation (30) commandables soient commandés dans un état de commutation reliant les moyens de traitement de données (18) à la deuxième source d'énergie (14) après une reconnaissance de l'apparition de la caractéristique de signal (VLS).

5. Support de données (1) avec un circuit intégré (5) selon l'une des revendications 1 à 4.
